# EUROPEAN PATENT SPECIFICATION

(11) **EP 3 541 503 B1**
(45) Date of publication and mention of the grant of the patent: **22.07.2020**
(21) Application number: 17835639.0
(22) Date of filing: 17.12.2017
(51) Int. Cl.: B01D 67/00, B01D 69/02, B01D 69/06, B01D 71/80

(54) **INTEGRALLY ASYMMETICAL, ISOPOROUS BLOCK COPOLYMER MEMBRANES IN FLAT SHEET GEOMETRY**
ISOPORÖSE BLOCK-COPOLYMERMEMBRANEN IN FLACHMEMBRAN-GEOMETRIE
MEMBRANE DE COPOLYMERE ISOPOREUSE SOUS FORME FEUILLE PLATE

(30) Priority: 01.03.2017 EP 17158631
(43) Date of publication of application: 25.09.2019
(73) Proprietor: Helmholtz-Zentrum Geesthacht Zentrum für Material- und Küstenforschung GmbH, 21502 Geesthacht (DE)
(72) Inventor: ABETZ, Volker, 21335 Lüneburg (DE); WU, Meiling, Adelphi, MD 20783-3446 (US)
(74) Representative: Uexküll & Stolberg
(86) International application number: PCT/EP2017/083185
(87) International publication number: WO 2018/157959

(56) References cited:
- WO-A1-2004/005380
- WO-A1-2008/115848
- KR-A- 20080 083 805
- UPADHYAYA L ET AL: "Filtration membranes from self-assembled block copolymers - a review on recent progress", EUROPEAN PHYSICAL JOURNAL. SPECIAL TOPICS, THE, SPRINGER, DE, FR, vol. 224, no. 9, 30 July 2015 (2015-07-30) , pages 1883-1897, XP035516649, ISSN: 1951-6355, DOI: 10.1140/EPJST/E2015-02507-7 [retrieved on 2015-07-30]
- T. THURN-ALBRECHT ET AL: "Overcoming Interfacial Interactions with Electric Fields", MACROMOLECULES, vol. 33, no. 9, 1 May 2000 (2000-05-01), pages 3250-3253, XP055395597, US ISSN: 0024-9297, DOI: 10.1021/ma991896z

## Description

### FIELD OF THE INVENTION

The present invention relates to a method of producing integrally asymmetrical block copolymer membranes in flat sheet geometry.

### BACKGROUND OF THE INVENTION

Porous synthetic membranes are used e.g. in research as supporting media in tissue engineering, as optical materials, as antireflection coatings, in catalysis, as biological or gas sensors, in separation technology, e.g. for filtration, as dielectric materials for electronic devices, etching masks, etc. They are commonly made from amphiphilic block copolymers in a non-solvent induced phase inversion process.

Porous synthetic membranes can be made from various block-copolymers. J. Hahn et al. "Thin Isoporous Block Copolymer Membranes: It Is All about the Process", ACS Appl. Mater. Interfaces, 2015, 7 (38), 21130-7 discloses a method for producing thin isoporous integrally-asymmetrical membranes introducing a spray or dip coating step into the membrane formation process of different diblock copolymers like polystyrene-block-poly(4-vinylpyridine), poly(α-methylstyrene)-bock-poly(4-vinylpyridi-ne), and polystyrene-block-poly(iso-propylglycidyl methacrylate).

Y. Xie et al. "Synthesis of highly porous poly (tert-butyl acrylate)-b-polysulfone-b-poly(tert-butyl acrylate) asymmetric membranes", Polym. Chem., 2016, 7, 3076-3089 discloses a method for producing porous membranes by non-solvent induced phase separation of polysulfone-based linear block copolymers. It was stated that the membranes reach mechanical stability much higher than other block copolymer membranes used in this method, which were mainly based on polystyrene blocks.

The membranes are produced using non-solvent induced phase separation (NIPS), wherein a block-copolymer solution is cast on a substrate, typically a nonwoven polyester or a glass plate, by means of a doctor blade, and then immersed in a non-solvent bath (coagulation bath), typically water, where the exchange of solvent and non-solvent takes place: the solvent migrates from the polymer solution to the coagulation bath, while non-solvent follows the reverse path, leading to the formation of a porous membrane.

Some parameters which may affect the structure of the resulting membrane are the nature of the block-copolymers, the composition of the casting solution, the composition of the coagulation bath, the exposure time, the humidity and the temperature of the air, which all affect the exchange rate of solvent and non-solvent and the velocity of phase separation. Non-solvent induced phase separation (NIPS) is taught for example in U.S. Patents 3,615,024; 5,066,401; and 6,024,872.

Today, phase inversion membranes are widely used in numerous chemical industries, biotechnology, and environmental separation processes.

However, integrally asymmetrical membranes with ordered nanopores on the surface are still not easy to produce reliably. Processes which produce membranes with a pore structure are known.

WO 2004/005380 A1 disclose a method for preparing conductive ordered ion exchange membranes by dispersing conductive ion exchange particles in a polymer melt or liquid at elevated temperature, allowing the particles or polymer domains to orient in an electric field and then cool the dispersion to a solid in an electrical field. Conducting domains are formed by phase separation under the electric field. These domains aggregate to form conducting channels within the matrix. The morphologies and shapes of the individual domains and their aggregates may be as irregular shaped particle, fibers or regular shaped particles such as spheres, tubules, plates helices, etc. In terms of size the domains may range from 1 nm to µm and mm. WO 2004/005380 A1 does not form integrally asymmetric polymer membranes, nor do the membranes exhibit an ordered pore structure at one of its surfaces.

KR 2008 0083805 A discloses a method for preparing a polymer film using an electric field while the film solidifies. KR 2008 0083805 A does not use phase inversion, and therefore does not form integrally asymmetrical polymer membranes.

WO 2008/115848 A1 discloses a method for block copolymer coated substrates with highly ordered cylindrical nanopores wherein a block copolymer film is coated on a substrate by means of spin coating. The block copolymer film is aligned by solvent annealing and used as a template to fabricate a nanopatterned substrate. A gold layer is deposited on the surface of reconstructed film, and the gold-coated film is ion etched.

It is an object of the present invention to reliably produce porous, integrally asymmetrical block copolymer membranes in flat sheet geometry having an ordered pore structure. Preferably, the pores are isoporous. THe process should be capable of being applied in a continuous and non-continuous manner.

In the context of the present invention the term *"isoporous"* is meant to designate pores having a pore size dispersity, i.e. ratio of the maximum pore diameter to the minimum pore diameter, of at most 3, preferably at most 2. The pore sizes and pore size distribution can e.g. be determined using microscopy such as scanning electron microscopy.

In the context of the present invention, the term *"integrally asymmetrical"* is well-known to a person skilled in the art (see e.g. WO 00/043114 A1), and is meant to designate a membrane having a support layer which has sponge-like, open-pored, microporous structure and this supporting layer adjacent to at least one of its surfaces a separation layer with denser structure of the same polymer or co-polymer.

### SUMMARY OF THE INVENTION

According to an embodiment, the present invention relates to a method for producing a block copolymer membrane in flat sheet geometry, the method comprising:
- providing a polymer solution of at least one amphiphilic block copolymer in a solvent;
- applying the polymer solution onto a substrate to provide a cast polymer solution;
- applying an electrical field having a field strength of from 0.5 kV/cm to 10 kV/cm for a time period between 1 second and 120 seconds to the cast polymer solution in a direction substantially perpendicular to the cast polymer solution; and
- thereafter leaving the cast polymer solution to rest for a period of time of 0 seconds to 120 seconds and immersing the cast polymer solution into a coagulation bath thereby inducing phase inversion to produce an integrally asymmetrical block copolymer membrane in flat sheet geometry.

According to an embodiment of the present invention the polymer solution is applied onto the substrate by casting, spraying or dipping, preferably casting. Most preferably, the polymer solution is applied to a substrate in flat sheet geometry by means of a doctor blade. The substrate material is preferably a material which does not react with the at least one amphiphilic block copolymer in a solvent, like a polymeric nonwoven or glass.

According to a preferred embodiment of the present invention, the polymer solution is applied onto the substrate in a thickness ranging from 1 µm to 1000 pm, preferably from 50 µm to 500 pm, such as from 100 µm to 300 µm.

The electrical field is applied to the cast polymer solution while microphase separation occurs, i.e. before immersing the cast polymer solution into a coagulation bath thereby inducing phase inversion to produce block copolymer membrane in flat sheet geometry. This distinguishes the present invention from other studies, where microphase separated systems in the presence of solvents have been studied, requiring less strong electric fields. The electrical field can be applied as a "pulse" or for a longer period of time from 1 to 120 seconds, most preferably from 5 to 20 seconds. The cast polymer solution is left to rest for another period of time of 0 seconds to 120 seconds, most preferably 0 to 60 seconds, before immersing into a coagulation bath.

Without wishing to be bound to any theory, according to the present invention microphase separation occurs during evaporation at the film surface in the presence of an electric field which aligns just the top surface of the later membrane, while the structure underneath is less affected, as it is more weakly segregated or not microphase separated at all due to the high swelling. The electric field will guide the direction of the occurring microphase separation perpendicular to the membrane surface coupled with the dielectric contrast of the block copolymer. As microphase separation starts, the polymer blocks of the block copolymer are aligned and the phase separated interface tends to align parallel to the electric field.

### DETAILED DESCRIPTION OF THE INVENTION

The at least one amphiphilic block copolymer used in the polymer solution for producing the flat sheet membranes according to the present invention preferably comprises two or more different polymer blocks such as blocks A, B; or A, B, C; or A, B, C, D forming block copolymers of the configuration A-B, A-B-A, A-B-C, A-B-C-B-A, A-B-C-D, A-B-C-D-C-B-A or multiblock copolymers based on the aforementioned configurations. Multiblock copolymers comprise structures of the base configurations that repeat multiple times. The polymer blocks are preferably selected from the group consisting of polystyrene, poly(α-methylstyrene), poly(para-methylstyrene), poly(t-butyl styrene), poly(trimethylsilylstyrene), poly(4-vinylpyridine), poly(2-vinylpyridine), poly(vinyl cyclohexane), polybutadiene, polyisoprene, poly(ethylene-stat-butylene), poly(ethylene-alt-propylene), polysiloxane, poly(alkylene oxide) such as poly(ethylene oxide), poly-ε-caprolactone, polylactic acid, poly(alkyl methacrylate) such as poly(methyl methacrylate), polymeth-acrylic acid, poly(alkyl acrylate) such as poly(methyl acrylate), poly(acrylic acid), poly(hydroxyethyl methacrylate), polyacrylamide, poly-N-alkylacrylamide, polysulfone, polyaniline, polypyrrole, polytriazole, polyvinylimidazole, polytetrazole, polyethylene diamine, poly(vinyl alcohol), polyvinylpyrrolidone, polyoxadiazole, polyvinylsulfonic acid, polyvinyl phosphonic acid or polymers.

Preferred amphiphilic block copolymers for use in the present invention are selected from polystyrene-*b*-poly(4-vinylpyridine) copolymers, poly(α-methylstyrene)-*b*-poly(4-vinylpyridine) copolymers, poly(para-methylstyrene)-*b*-poly(4-vinylpyridine) copolymers, poly(*t*-butylstyrene)-*b*-poly(4-vinylpyridine) copolymers, poly(trimethylsilylstyrene)-b-poly(4-vinylpyridine) copolymers, polystyrene-*b*-poly(2-vinylpyridine) copolymers, poly(α-methylstyrene)-*b*-poly(2-vinylpyridine) copolymers, poly(para-methylstyrene)-*b*-poly(2-vinylpyridine) copolymers, poly(t-butylstyrene)-*b*-poly(2-vinylpyridine) copolymers, poly(trimethylsilylstyrene)-b-poly(2-vinylpyridine) copolymers, polystyrene-*b*-polybutadiene copolymers, poly(α-methylstyrene)-*b*-polybutadiene copolymers, poly(para-methylstyrene)-*b*-polybutadiene copolymers, poly(t-butylstyrene)-*b*-polybutadiene copolymers, poly(trimethylsilylstyrene)-*b*-polybutadiene copolymers, polystyrene-*b*-polyisoprene copolymers, poly(*α*-methylstyrene)-*b-*polyisoprene copolymers, poly(para-methylstyrene)-b-polyisoprene copolymers, poly(*t*-butylstyrene)-*b*-polyisoprene copolymers, poly(trimethylsilyl-styrene)-*b*-polyisoprene copolymers, polystyrene-*b*-poly(ethylene-stat-butylene) copolymers, poly(α-methylstyrene)-*b*-poly(ethylene-*stat*-butylene) copolymers, poly(para-methylstyrene)-*b*-poly(ethylene-*stat*-butylene) copolymers, poly(*t*-butylstyrene)-*b*-poly(ethylene-*stat-*butylene) copolymers, poly(trimethylsilylstyrene)-*b-*poly(ethylene-*stat*-butylene) copolymers, polystyrene-*b-*(ethylene-*alt*-propylene) copolymers, poly(α-methylstyrene)-*b-*(ethylene-*alt*-propylene) copolymers, poly(para-methylstyrene)-b-(ethylene-*alt*-propylene) copolymers, poly(*t*-butylstyrene)-*b-*(ethylene-*alt*-propylene) copolymers, poly(trimethylsilylstyrene)-*b*-(ethylene-*alt*-propylene) copolymers, polystyrene-*b*-polysiloxane copolymers, poly(α-methylstyrene)-*b*-polysiloxane copolymers, poly(para-methylstyrene)-*b*-polysiloxane copolymers, poly(*t-*butylstyrene)-*b*-polysiloxane copolymers, poly(trimethylsilylstyrene)-*b*-polysiloxane copolymers, polystyrene-*b*-polyalkylene oxide copolymers, poly(α-methylstyrene)-*b*-polyalkylene oxide copolymers, poly(para-methylstyrene)-*b*-polyalkylene oxide copolymers, poly(*t-*butylstyrene)-*b*-polyalkylene oxide copolymers, poly(trimethyl-silylstyrene)-*b*-polyalkylene oxide copolymers, polystyrene-*b-*poly-ε-caprolactone copolymers, poly(α-methylstyrene)-*b*-poly-ε-caprolactone copolymers, poly(para-methylstyrene)-*b*-poly-ε-caprolactone copolymers, poly(*t*-butylstyrene)-*b*-poly-ε-caprolactone copolymers, poly(trimethylsilylstyrene)-*b*-poly-ε-caprolactone copolymers, polystyrene-*b*-poly(methyl methacrylate) copolymers, poly(α-methylstyrene)-*b*-poly(methyl methacrylate) copolymers, poly(para-methylstyrene)-*b*-poly(methyl methacrylate) copolymers, poly(*t*-butylstyrene)-*b*-poly(methyl methacrylate) copolymers, poly(trimethylsilylstyrene)-*b-*poly(methyl methacrylate) copolymers, polystyrene-*b-*poly(methyl acrylate) copolymers, poly(α-methylstyrene)-*b-*poly(methyl acrylate) copolymers, poly(para-methylstyrene)-b-poly(methyl acrylate) copolymers, poly(t-butylstyrene)-b-poly(methyl acrylate) copolymers, poly(trimethylsilylstyrene)-*b*-poly(methyl acrylate), polystyrene-*b*-poly(hydroxyethyl methacrylate) copolymers, poly(*a*-methylstyrene)-*b-*poly(hydroxyethyl methacrylate) copolymers, poly(para-methylstyrene)-*b*-poly(hydroxyethyl methacrylate) copolymers, poly (*t*-butylstyrene)-*b*-poly(hydroxyethyl methacrylate) copolymers, poly(trimethylsilylstyrene)-*b*-poly(hydroxyethyl methacrylate) copolymers, polystyrene-*b*-polyacrylamide copolymers, poly(α-methylstyrene)-*b*-polyacrylamide copolymers, poly(para-methylstyrene)-*b*-polyacrylamide copolymers, poly(t-butylstyrene)-*b*-polyacrylamide copolymers, poly(trimethyl-silylstyrene)-*b*-polyacrylamide copolymers, polystyrene-*b-*poly(vinyl alcohol) copolymers, poly(α-methylstyrene)-*b-*poly(vinyl alcohol) copolymers, poly(para-methylstyrene)-b-poly(vinyl alcohol) copolymers, poly(t-butylstyrene)-b-poly(vinyl alcohol) copolymers, poly(trimethylsilylstyrene)-b-poly(vinyl alcohol) copolymers, polystyrene-*b-*polyvinylpyrrolidone copolymers, poly(α-methylstyrene)-*b-*polyvinylpyrrolidone copolymers, poly(para-methylstyrene)-b-polyvinylpyrrolidone copolymers, poly(t-butylstyrene)-b-polyvinylpyrrolidone copolymers, poly(trimethylsilylstyrene)-*b*-polyvinylpyrrolidone copolymers, polystyrene-*b*-poly-vinylcyclohexane copolymers, polystyrene-*b*-poly-vinylcyclohexane copolymers, polystyrene-*b*-poly(vinylcyclohexane) copolymers, polystyrene-*b*-poly-vinylcyclohexane copolymers, poly(trimethylsilylstyrene)-*b*-poly(vinylcyclohexane) copolymers and the like.

The block copolymers and the polymer blocks used according to the present invention preferably have a polydispersity of less than 2.5, more preferably of less than 2.2, more preferably of less than 2.0. The polymer lengths of the at least two polymer blocks of the amphiphilic block copolymers are preferably selected with respect to each other so that a self-organization in the solvent leads to the formation of a spherical, cylindrical or co-continuous, in particular gyroidal, micelle structures or microphase structures in the solvent, in particular a length ratio between approximately 2:1 and approximately 10:1, in particular between approx. 3:1 and 6:1. These length ratios of the majority components to the minority components of the block copolymers lead to the desired micelle structure, i.e. to the inclusion of individual spherical micelles of the minority components in the bulk of the majority components or to cylindrical or continuous, for example gyroidal, micelle structures, in which the minority components form the cylinders or respectively gyroidal filaments or respectively branchings in the bulk of the majority components.

The block copolymers preferably have a molecular weight between 50 kg/mol and 200 kg/mol, in particular between 75 kg/mol and 150 kg/mol. In this range, the pore size can be adjusted in a particular fine manner through selection of the molecular weight. The polymer preferably makes up a percentage by weight between 10 wt.% and 50 wt.%, and most preferably between 15 wt.% and 35 wt.% of the polymer solution.

Several solvents are suitable for preparing the polymer solution. Preferred solvents include diethyl ether, dimethylformamide, dimethylacetamide, N-methylpyrrolidone, dimethyl-sulfoxide, acetonitrile, dioxane, acetone, and/or tetrahydrofurane. According to an embodiment a pure solvent or a solvent mixture is applied which is preferably selected such that different polymer blocks of the amphiphilic block copolymers are soluble up to different degrees and such that solvents are volatile to different degrees. The use of a solvent mixture supports the solidification of the self-organization and microphase formation on the surface of the membrane before immersion in the precipitation bath.

According to a further preferred embodiment of the present invention, the polymer solution comprises at least one metal salt. Preferably the metal is selected from an element of the second main group of the periodic system of elements, such as Mg, Ca or Sr or from non-toxic transition metals such as Fe. More preferably, the salt is an organic salt of Mg, Ca or Sr, most preferably magnesium acetate. The metals of the second main group of the periodic system are biocompatible making them preferred for membranes with biological or medical applications. The supporting effect of the salt in the phase separation can probably be explained in that the metal salt leads to the formation of partially charged polyelectrolytic micelle cores, which positively impact the precipitant-induced phase separation.

According to a still further preferred embodiment, the polymer solution comprises at least one carbohydrate, multifunctional alcohol, multifunctional phenol and/or multifunctional organic acid. Preferred carbohydrates include saccharose, D(+)-glucose, D(-)-fructose and/or cyclodextrin, in particular α-cyclodextrin. Carbohydrates as used in the present invention lead to a stabilization of the isoporous separation-active surface during the phase inversion. The supporting effect of the at least one carbohydrate in phase separation can probably be explained in that the carbohydrates form hydrogen bonds with the hydrophilic block of the block copolymers.

A variety of materials can be selected as a substrate material, provided that it does not react with the polymer solution of at least one amphiphilic block copolymer in a solvent. Preferably the substrate material is a glass plate. According to another embodiment, the polymer solution is cast onto a glass plate using a doctor blade. Alternatively, the polymer solution is applied onto the substrate by spraying or dipping. Also in these embodiments the substrate material is preferably a glass plate.

The method of the present invention applies a phase separation process where the cast polymer solution is transferred into a coagulation bath. The cast polymer solution is left to rest for another period of time of 0 seconds to 120 seconds, most preferably 0 to 60 seconds, before immersing into a coagulation bath. However, it should not dry out, as otherwise phase separation cannot occur in the coagulation bath. The membrane precipitates in the coagulation bath by phase separation to form an integrally asymmetric polymer membrane.

The liquid in the coagulation bath preferably comprises water, methanol, ethanol or a mixture of two or more thereof.

According to a preferred embodiment of the present invention, the electrical field is generated by placing the cast polymer solution between two flat electrodes. Preferably the gap between the two electrodes is set as between 4 and 10 cm. Different voltages of direct current can be applied, such as between 5 kV and 50 kV, for a time period between 1 second and 2 minutes, more preferably between 5 seconds and 60 seconds, most preferably for periods of time between 10 seconds and 30 seconds.

The electric field strength is given by the high voltage and gap distance between the two electrodes. The electric field strength is calculated by the model of parallel plate capacitor, namely, the ratio between the high voltage and gap distance. The electric field is from 0.5 kV/cm to 10 kV/cm, preferably 0.9 kV/cm to 6.9 kV/cm. In this situation, the gap distance between two electrodes could e.g. be set as between 3 cm and 1 cm, such as 5.8 cm. Different voltages of direct current can be applied, such as between 5 kV and 40 kV.

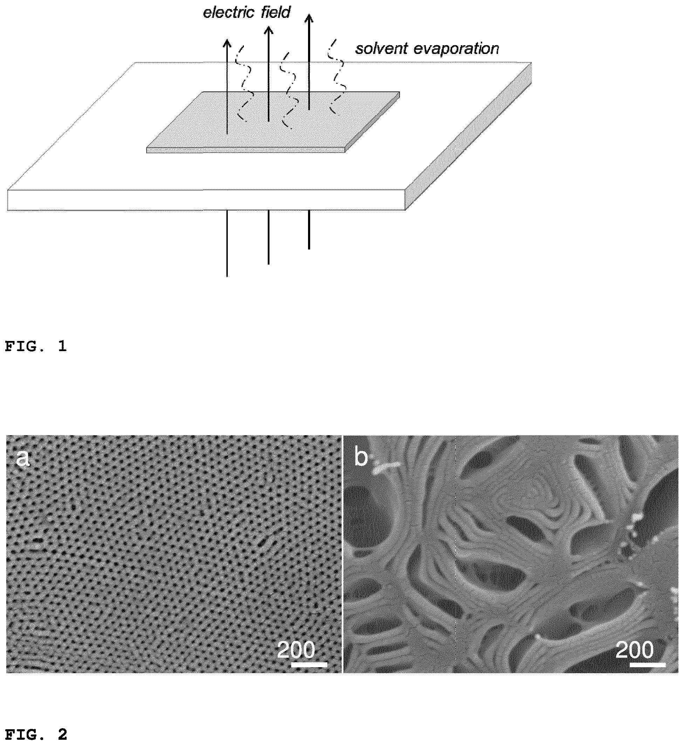

An illustrative setup of the electrical field assembly according to the present invention is schematically shown in **Fig. 1.** Fig. 1 shows a cast polymer solution on a substrate to which, during initial evaporation of solvent, a direct current electrical field is applied in a direction substantially perpendicular to the cast polymer solution.

The invention is further described by the appending examples.

### EXAMPLE 1 and COMPARATIVE EXAMPLE 1

A block copolymer of polystyrene-b-poly-4-vinylpyridine (PS-b-P4VP) with a molecular weight of 100 kg/mol and 25 wt% of P4VP was dissolved in a mixture of dimethylformamide (DMF) and tatrahydrofurane (THF) to produce a solution of at least one amphiphilic block copolymer in a solvent. The concentration of PS-b-P4VP in the solution was 25 wt%. DMF and THF each were present in a weight concentration of 37.5 wt%.

The polymer solution was applied onto a glass plate using a doctor blade to produce a cast polymer solution on the glass plate with 200 µm in thickness. Thereafter, the glass plate with the cast polymer solution was then placed between two flat electrodes having a gap of 5.8 cm between the two electrodes, and then a direct current electrical field of 30 kV for 10 seconds.

Thereafter, the glass plate with the cast polymer solution was thereafter - after a rest period of 5 seconds - immersed into a water bath thereby inducing phase inversion to produce block copolymer membrane in flat sheet geometry. After sufficient immersion time, the block copolymer membrane in flat sheet geometry was removed and dried in vacuum.

For comparison purposes, a comparative block copolymer membrane in flat sheet geometry membrane was produced in the same way as above with the exception of the electric field treatment. Instead, the glass plate with the cast polymer solution was left to rest for 15 seconds before immersing the glass plate with the cast polymer solution into a water bath.

The surface morphologies of both the block copolymer membrane in flat sheet geometry according to the present invention and the comparative block copolymer membrane in flat sheet geometry membrane were measured using scanning electron microscopy (SEM), as shown in Figs. 2a and 2b.

Fig. 2 shows the surface morphology of membranes fabricated (a) by casting (5 sec) followed by an electric field with a voltage of 30 kV for 10 sec; (b) by casting (5 sec) followed by another 10 sec in air atmosphere. The concentration of PS(75k)-b-P4VP(25k) was 25 wt%.

The comparative PS-b-P4VP block copolymer membrane in flat sheet geometry membrane (Fig. 2b) shows parallel lamellae, whereas the PS-b-P4VP block copolymer membrane in flat sheet geometry membrane produced according to the present invention shows a morphology with ordered, isoporous nanopores (Fig. 2a) .

### EXAMPLE 2 and COMPARATIVE EXAMPLE 2

Example 1 was repeated with the exception that the concentration of PS-b-P4VP was 20 wt% and that an electrical field of 10 kV was applied for 10 seconds before immersing the glass plate with the cast polymer solution into a water bath. Again, for comparison, a comparative membrane was produced according to the method of Example 2 without electric field treatment. Instead, the glass plate with the cast polymer solution was left to rest for 5 seconds before immersing the glass plate with the cast polymer solution into a water bath.

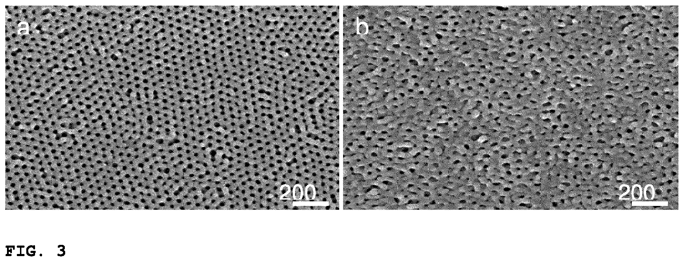

The surface morphologies of both the block copolymer membrane in flat sheet geometry according to the present invention and the comparative block copolymer membrane in flat sheet geometry membrane were measured using scanning electron microscopy (SEM), as shown in Figs. 3a and 3b.

Fig. 3 shows the surface morphology of membranes fabricated (a) by casting (5 sec) followed by an electric field with a voltage of 10 kV for 5 s; (b) by casting (5 sec) in an air atmosphere. The concentration of PS(75k)-b-P4VP(25k) was 20 wt%.

The comparative PS-b-P4VP block copolymer membrane in flat sheet geometry membrane (Fig. 3b) shows spares and disordered nanopores, whereas the PS-b-P4VP block copolymer membrane in flat sheet geometry membrane produced according to the present invention shows a morphology with ordered, isoporous nanopores (Fig. 3a).

## Claims

1. A method for producing a block copolymer membrane in flat sheet geometry, the method comprising:
- providing a polymer solution of at least one amphiphilic block copolymer in a solvent;
- applying the polymer solution onto a substrate to provide a cast polymer solution;
- applying an electrical field having a field strength from 0.5 kV/cm to 10 kV/cm for a time period between 1 second and 120 seconds to the cast polymer solution in a direction substantially perpendicular to the cast polymer solution; and
- thereafter leaving the cast polymer solution to rest for a period of time of 0 seconds to 120 seconds and immersing the cast polymer solution into a coagulation bath thereby inducing phase inversion to produce block copolymer membrane in flat sheet geometry.

2. The method of claim 1, wherein the electrical field applied to the cast polymer solution is a direct current electrical field.

3. The method of any of the preceding claims, wherein the electrical field applied to the cast polymer solution is created by two flat electrodes.

4. The method of claim 3, wherein a gap between the electrodes is between 4 and 10 cm.

5. The method of any of the preceding claims wherein the electrical field is applied to the cast polymer solution for a time period between 5s and 1 min.

6. The method of any of the preceding claims, wherein the amphiphilic block copolymer is selected from polystyrene-*b*-poly(4-vinylpyridine) copolymers, poly(α-methylstyrene)-*b*-poly(4-vinylpyridine) copolymers, poly(para-methylstyrene)-*b*-poly(4-vinylpyridine) copolymers, *poly(t-*butylstyrene)-*b*-poly(4-vinylpyridine) copolymers, poly(trimethylsilylstyrene)-*b*-poly(4-vinylpyridine) copolymers, polystyrene-*b*-poly(2-vinylpyridine) copolymers, poly(α-methylstyrene)-*b*-poly(2-vinylpyridine) copolymers, poly(para-methylstyrene)-*b*-poly(2-vinylpyridine) copolymers, poly(*t*-butylstyrene)-*b*-poly(2-vinylpyridine) copolymers, poly(trimethylsilylstyrene)-*b*-poly(2-vinylpyridine) copolymers, polystyrene-b-polybutadiene copolymers, poly(α-methylstyrene)-*b*-polybutadiene copolymers, poly-(para-methylstyrene)-*b*-polybutadiene copolymers, poly(t-butylstyrene)-*b*-polybutadiene copolymers, poly(trimethyl-silylstyrene)-*b*-polybutadiene copolymers, polystyrene-*b-*polyisoprene copolymers, poly(α-methylstyrene)-*b*-polyisoprene copolymers, poly(para-methylstyrene)-*b*-polyisoprene copolymers, poly(t-butylstyrene)-b-polyisoprene copolymers, poly(trimethylsilyl-styrene)-*b*-polyisoprene copolymers, polystyrene-*b*-poly(ethylene-stat-butylene) copolymers, poly(α-methylstyrene)-*b*-poly(ethylene-stat-butylene) copolymers, poly(para-methylstyrene)-*b*-poly(ethylene-stat-butylene) copolymers, poly(t-butylstyrene)-b-poly(ethylene-stat-butylene) copolymers, poly(trimethyl-silylstyrene)-*b*-poly(ethylene-stat-butylene) copolymers, polystyrene-*b*-(ethylene-alt-propylene) copolymers, poly(α-methylstyrene)-b-(ethylene-alt-propylene) copolymers, poly(para-methylstyrene)-b-(ethylene-alt-propylene) copolymers, poly(t-butylstyrene)-b-(ethylene-alt-propylene) copolymers, poly(trimethylsilylstyrene)-*b*-(ethylene-alt-propylene) copolymers, polystyrene-*b*-polysiloxane copolymers, poly(α-methylstyrene)-*b*-polysiloxane copolymers, poly(para-methylstyrene)-*b*-polysiloxane copolymers, poly(t-butylstyrene)-b-polysiloxane copolymers, poly(trimethylsilylstyrene)-*b*-polysiloxane copolymers, polystyrene-*b*-polyalkylene oxide copolymers, poly(α-methylstyrene)-*b*-polyalkylene oxide copolymers, poly(para-methylstyrene)-b-polyalkylene oxide copolymers, poly(t-butylstyrene)-*b*-polyalkylene oxide copolymers, poly(trimethyl-silylstyrene)-*b*-polyalkylene oxide copolymers, polystyrene-*b*-poly-ε-caprolactone copolymers, poly(α-methylstyrene)-*b*-poly-ε-caprolactone copolymers, poly(para-methylstyrene)-*b*-poly-*ε*-caprolactone copolymers, poly(*t*-butylstyrene)-*b*-poly-*ε*-caprolactone copolymers, poly(trimethylsilylstyrene)-*b*-poly-*ε*-caprolactone copolymers, polystyrene-*b*-poly(methyl methacrylate) copolymers, poly (α-methylstyrene)-*b*-poly (methyl methacrylate) copolymers, poly(para-methylstyrene)-*b*-poly(methyl methacrylate) copolymers, poly(*t*-butylstyrene)-*b*-poly(methyl methacrylate) copolymers, poly(trimethylsilylstyrene)-b-poly (methyl methacrylate) copolymers, polystyrene-*b-*poly(methyl acrylate) copolymers, poly(α-methylstyrene)-*b-*poly(methyl acrylate) copolymers, poly(para-methylstyrene)-*b*-poly(methyl acrylate) copolymers, poly(t-butylstyrene)-*b*-poly(methyl acrylate) copolymers, poly(trimethylsilylstyrene)-*b*-poly(methyl acrylate), polystyrene-*b*-poly(hydroxyethyl methacrylate) copolymers, poly(α-methylstyrene)-*b*-poly(hydroxyethyl methacrylate) copolymers, poly(para-methylstyrene)-*b*-poly(hydroxyethyl methacrylate) copolymers, poly(*t*-butylstyrene)-*b-*poly(hydroxyethyl methacrylate) copolymers, poly(trimethylsilylstyrene)-*b*-poly(hydroxyethyl methacrylate) copolymers, polystyrene-*b*-polyacrylamide copolymers, poly(α-methylstyrene)-*b*-polyacrylamide copolymers, poly(para-methylstyrene)-*b*-polyacrylamide copolymers, poly(*t*-butylstyrene)-*b*-polyacrylamide copolymers, poly(trimethyl-silylstyrene)-*b*-polyacrylamide copolymers, polystyrene-*b*-poly(vinyl alcohol) copolymers, poly(α-methylstyrene)-*b*-poly(vinyl alcohol) copolymers, poly(para-methylstyrene)-*b*-poly(vinyl alcohol) copolymers, poly(*t*-butylstyrene)-*b*-poly(vinyl alcohol) copolymers, poly (trimethylsilylstyrene)-*b*-poly(vinyl alcohol) copolymers, polystyrene-*b*-polyvinylpyrrolidone copolymers, poly(α-methylstyrene)-*b*-polyvinylpyrrolidone copolymers, poly(para-methylstyrene)-b-polyvinylpyrrolidone copolymers, poly(t-butylstyrene)-b-polyvinylpyrrolidone copolymers, and poly(trimethylsilylstyrene)-*b*-polyvinylpyrrolidone copolymers polystyrene-*b*-poly-vinylcyclohexane copolymers, polystyrene-*b*-poly-vinylcyclohexane copolymers, polystyrene-*b*-poly-vinylcyclohexane copolymers, polystyrene-*b*-poly-vinylcyclohexane copolymers, poly(trimethylsilylstyrene)-*b*-polyvinyl-cyclohexane copolymers.

7. The method according to any of the preceding claims, wherein the amphiphilic block copolymer has a polydispersity of less than 2.5

8. The method according to any of the preceding claims, wherein the solvent for the polymer is selected from diethyl ether, dimethylformamide, dimethylacetamide, N-methylpyrrolidone, dimethyl-sulfoxide, acetonitrile, dioxane, acetone, and/or tetrahydrofurane.

9. The method according to any of the preceding claims, wherein the polymer solution further comprises an organic metal salt, wherein the metal is selected from an element of the second main group of the periodic system.

10. The method according to any of the preceding claims, wherein the polymer solution further comprises at least one carbohydrate selected from a multifunctional phenol, a multifunctional organic acid, saccharose, D(+)-glucose, D(-)-fructose and/or cyclodextrin, in particular α-cyclodextrin.

## Patentansprüche

1. Verfahren zur Herstellung einer Blockcopolymermembran in Flachfoliengeometrie, wobei das Verfahren umfasst:
- Bereitstellen einer Polymerlösung von mindestens einem amphiphilen Blockcopolymer in einem Lösungsmittel;
- Aufbringen der Polymerlösung auf ein Substrat, um eine Gusspolymerlösung bereitzustellen;
- Anlegen eines elektrischen Feldes mit einer Feldstärke von 0,5 kV/cm bis 10 kV/cm für einen Zeitraum zwischen 1 Sekunde und 120 Sekunden an die Gusspolymerlösung in einer zur Gusspolymerlösung im Wesentlichen senkrechten Richtung; und
- anschließendes Ruhenlassen der Gusspolymerlösung für einen Zeitraum von 0 Sekunden bis 120 Sekunden und Tauchen der Gusspolymerlösung in ein Koagulationsbad, wodurch eine Phaseninversion induziert wird, um eine Blockcopolymermembran in Flachfoliengeometrie herzustellen.

2. Verfahren nach Anspruch 1, wobei das an die Gusspolymerlösung angelegte elektrische Feld ein elektrisches Gleichstromfeld ist.

3. Verfahren nach einem der vorhergehenden Ansprüche, wobei das an die Gusspolymerlösung angelegte elektrische Feld durch zwei flache Elektroden erzeugt wird.

4. Verfahren nach Anspruch 3, wobei ein Abstand zwischen den Elektroden zwischen 4 und 10 cm beträgt.

5. Verfahren nach einem der vorhergehenden Ansprüche, wobei das elektrische Feld für einen Zeitraum zwischen 5 s und 1 min an die Gusspolymerlösung angelegt wird.

6. Verfahren nach einem der vorhergehenden Ansprüche, wobei das amphiphile Blockcopolymer ausgewählt ist aus Polystyrol-b-poly(4-vinylpyridin)-Copolymeren, Poly(α-methylstyrol)-b-poly(4-vinylpyridin)-Copolymeren, Poly(para-methylstyrol)-b-poly(4-vinylpyridin)-Copolymeren, Poly(t-butylstyrol)-b-poly(4-vinylpyridin)-Copolymeren, Poly (trimethylsilylstyrol)-b-poly(4-vinylpyridin)-Copolymeren, Polystyrol-b-poly(2-vinylpyridin)-Copolymeren, Poly(α-methylstyrol)-b-poly(2-vinylpyridin)-Copolymeren, Poly (para-methylstyrol)-b-poly(2-vinylpyridin)-Copolymeren, Poly(t-butylstyrol)-b-poly(2-vinylpyridin)-Copolymeren, Poly(trimethylsilylstyrol)-b-poly(2-vinylpyridin)-Copolymeren, Polystyrol-b-polybutadien-Copolymeren, Poly (α-methylstyrol)-b-polybutadien-Copolymeren, Poly-(para-methylstyrol)-b-polybutadien-Copolymeren, Poly(t-butylstyrol)-b-polybutadien-Copolymeren, Poly (trimethyl-silylstyrol)-b-polybutadien-Copolymeren, Polystyrol-b-pPlyisopren-Copolymeren, Poly(α-methylstyrol)-*b*-polyisopren-Copolymeren, Poly(para-methylstyrol)-b-polyisopren-Copolymeren, Poly(t-butylstyrol)-b-polyisopren-Copolymeren, Poly(trimethylsilylstyrol)-b-polyisopren-Copolymeren, Polystyrol-b-poly(ethylen-stat-butylen)-Copolymeren, Poly(α-methylstyrol)-*b*-poly(ethylen-stat-butylen)-Copolymeren, Poly(para-methylstyrol)-b-poly(ethylen-stat-butylen)-Copolymeren, Poly(t-butylstyrol)-b-poly(ethylen-stat-butylen)-Copolymeren, Poly(trimethylsilylstyrol)-b-poly(ethylen-stat-butylen)-Copolymeren, Polystyrol-b-(ethylen-alt-propylen)-Copolymeren, Poly(α-methylstyrol)-b-(ethylen-alt-propylen)-Copolymeren, Poly(para-methylstyrol)-b-(ethylen-alt-propylen)-Copolymeren, Poly (t-butylstyrol)-b-(ethylen-alt-propylen)-Copolymeren, Poly (trimethylsilylstyrol)-b-(ethylen-alt-propylen)-Copolymeren, Polystyrol-b-polysiloxan-Copolymeren, Poly(α-methylstyrol)-b-polysiloxan-Copolymeren, Poly(para-methylstyrol)-b-polysiloxan-Copolymeren, Poly(t-butylol)-b-polysiloxan-Copolymeren, Poly(trimethylsilylstyrol)-b-polysiloxan-Copolymeren, Polystyrol-b-polyalkylenoxid-Copolymeren, Poly(α-methylstyrol)-b-polyalkylenoxid-Copolymeren, Poly(para-methylstyrol)-b-polyalkylenoxid-Copolymeren, Poly(t-butylstyrol)-polymer-polyalkylenoxid-Copolymeren, Poly(trimethylsilylstyrol)-b-polyalkylenoxid-Copolymeren, Polystyrol-b-poly-ε-caprolacton-Copolymeren, Poly(α-methylstyrol)-b-poly-ε-caprolacton-Copolymeren, Poly(para-methylstyrol)-b-poly-ε-caprolacton-Copolymeren, Poly(t-butylstyrol)-b-poly-ε-caprolacton-Copolymeren, Poly (tri-methylsilylstyrol)-b-poly-ε-caprolacton-Copolymeren, Polystyrol-b-poly(methylmethacrylat)-Copolymeren, Poly(α-methylstyrol)-b-poly(methylmethacrylat)-Copolymeren, Poly (para-methylstyrol)-b-poly(methylmethacrylat)-Copolymeren, Poly(t-butylstyrol)-b-poly(methylmethacrylat)-Copolymeren, Poly(trimethylsilylstyrol)-b-poly(methylmethacrylat)-Copolymeren, Polystyrol-b-poly(methylacrylat)-Copolymeren, Poly(a-methylstyrol)-b-poly(methylacrylat)-Copolymeren, Poly(para-methylstyrol)-b-poly(methylacrylat)-Copolymeren, Poly(t-butylstyrol)-b-poly(methylacrylat)-Copolymeren, Poly(trimethylsilylstyrol)-b-poly(methylacrylat)-Copolymeren, Polystyrol-b-poly(hydroxyethylmethacrylat)-Co-polymeren, Poly(α-methylstyrol)-b-poly (hydroxyethylmethacrylat)-Copolymeren, Poly(para-methylstyrol)-b-poly (hydroxyethylmethacrylat)-Copolymeren, Poly(t-butylstyrol) -b-poly(hydroxyethylmethacrylat)-Copolymeren, Poly (trime-thylsilylstyrol)-b-poly(hydroxyethylmethacrylat)-Copolymeren, Polystyrol-b-polyacrylamid-Copolymeren, Poly(α-methylstyrol)-b-polyacrylamid-Copolymeren, Poly(para-methylstyrol)-polypolymer-Copolymeren, Poly(t-butylstyrol) -b-polyacrylamid-Copolymeren, Poly(trimethylsilylstyrol)-b-polyacrylamid-Copolymeren, Polystyrol-b-poly(vinylalkohol)-Copolymeren, Poly(α-methylstyrol)-b-poly(vinylalkohol)-Copolymeren, Poly(para-methylstyrol)-b-poly-(vinylalkohol)-Copolymeren, Poly(t-butylstyrol)-b-poly (vinylalkohol)-Copolymeren, Poly(trimethyl)silylstyrol)-b-poly(vinylalkohol)-Copolymeren, Polystyrol-b-polyvinylpyrrolidon-Copolymeren, Poly(α-methylstyrol)-b-polyvinylpyrrolidon-Copolymeren, Poly(para-methylstyrol)-b-polyvinylpyrrolidon-Copolymeren, Poly(t-polyvinylpyrrolidon-copolymeren-b-polyvinylpyrrolidon-Copolymere und Poly-(trimethylsilylstyrol)-b-polyvinylpyrrolidon-Copolymeren; Polystyrol-b-polyvinylcyclohexan-Copolymeren, Polystyrol-b-polyvinylcyclohexan-Copolymern, Polystyrol-b-poly-vinylcyclohexan-Copolymeren, Poly(trimethylsilylstyrol)-b-polyvinylcyclohexan-Copolymeren.

7. Verfahren nach einem der vorhergehenden Ansprüche, wobei das amphiphile Blockcopolymer eine Polydispersität von weniger als 2,5 aufweist.

8. Verfahren nach einem der vorhergehenden Ansprüche, wobei das Lösungsmittel für das Polymer ausgewählt ist aus Diethylether, Dimethylformamid, Dimethylacetamid, N-Methylpyrrolidon, Dimethylsulfoxid, Acetonitril, Dioxan, Aceton und/oder Tetrahydrofuran.

9. Verfahren nach einem der vorhergehenden Ansprüche, wobei die Polymerlösung weiterhin ein organisches Metallsalz umfasst, wobei das Metall aus einem Element der zweiten Hauptgruppe des periodischen Systems ausgewählt ist.

10. Verfahren nach einem der vorhergehenden Ansprüche, wobei die Polymerlösung weiterhin mindestens ein Kohlenhydrat umfasst, das aus einem multifunktionellen Phenol, einer multifunktionellen organischen Säure, Saccharose, D(+)-Glucose, D(-)-Fructose und/oder Cyclodextrin, insbesondere α-Cyclodextrin, ausgewählt ist.

## Revendications

1. Procédé en vue de produire une membrane de copolymère(s) à blocs sous forme de feuille à géométrie plane, le procédé comportant les opérations suivantes :
- se procurer une solution de polymère(s) constituée d'au moins un copolymère à blocs amphiphile dans un solvant,
- appliquer la solution de polymère(s) sur un support de manière à former une solution de polymère(s) coulée,
- appliquer à la solution de polymère(s) coulée un champ électrique d'une intensité valant de 0,5 kV/cm à 10 kV/cm pendant un laps de temps compris entre 1 seconde (s) et 120 s, suivant une direction essentiellement perpendiculaire à la solution de polymère(s) coulée,
- et laisser ensuite la solution de polymère(s) coulée au repos pendant un laps de temps de 0 s à 120 s, et immerger la solution de polymère(s) coulée dans un bain de coagulation, en provoquant ainsi une inversion de phases, de manière à produire une membrane de copolymère(s) à blocs sous forme de feuille à géométrie plane.

2. Procédé selon la revendication 1, dans lequel le champ électrique appliqué à la solution de polymère(s) coulée est un champ électrique à courant continu.

3. Procédé selon n'importe laquelle des revendications précédentes, dans lequel le champ électrique appliqué à la solution de polymère(s) coulée est créé par deux électrodes planes.

4. Procédé selon la revendication 3, dans lequel l'écart entre les électrodes est compris entre 4 et 10 cm.

5. Procédé selon n'importe lesquelles des revendications précédentes, dans lequel on applique le champ électrique à la solution de polymère(s) coulée pendant un laps de temps compris entre 5 s et 1 min.

6. Procédé selon n'importe lesquelles des revendications précédentes, dans lequel le copolymère à blocs amphiphile est choisi parmi les suivants :
- copolymères de polystyrène-*b*-poly(4-vinylpyridine), copolymères de poly(a-méthylstyrène)-b-poly(4-vinylpyridine), copolymères de *poly(para-*méthylstyrène)-b-poly(4-vinylpyridine), copolymères de poly(*t*-butylstyrène)-*b-*poly(4-vinylpyridine), copolymères de poly(triméthylsilylstyrène)-b-poly(4-vinylpyridine),
- copolymères de polystyrène-*b*-poly(2-vinylpyridine), copolymères de poly(a-méthylstyrène)-b-poly(2-vinylpyridine), copolymères de *poly(para-*méthylstyrène)-b-poly(2-vinylpyridine), copolymères de poly(*t*-butylstyrène)-*b-*poly(2-vinylpyridine), copolymères de poly(triméthylsilylstyrène)-b-poly(2-vinylpyridine),
- copolymères de polystyrène-b-polybutadiène, copolymères de poly(a-méthylstyrène)-b-polybutadiène, copolymères de poly(*para*-méthylstyrène)-*b-*polybutadiène, copolymères de poly(*t*-butylstyrène)-*b*-polybutadiène, copolymères de poly(triméthylsilylstyrène)-b-polybutadiène,
- copolymères de polystyrène-b-polyisoprène, copolymères de poly(a-méthylstyrène)-b-polyisoprène, copolymères de poly(para-méthylstyrène)-b-polyisoprène, copolymères de poly(*t*-butylstyrène)-*b*-polyisoprène, copolymères de poly(triméthylsilylstyrène)-b-polyisoprène,
- copolymères de polystyrène-*b*-poly(éthylène-stat-butylène), copolymères de poly(a-méthylstyrène)-*b*-poly(éthylène-*stat*-butylène), copolymères de poly(para-méthylstyrène)-*b*-poly(éthylène-*stat*-butylène), copolymères de poly(*t*-butylstyrène)-*b*-poly(éthylène-*stat*-butylène), copolymères de poly(triméthylsilylstyrène)-*b*-poly(éthylène-*stat*-butylène),
- copolymères de polystyrène-*b*-(éthylène-*alt*-propylène), copolymères de poly(a-méthylstyrène)-*b*-(éthylène-*alt*-propylène), copolymères de *poly(para-*méthylstyrène)-*b*-(éthylène-*alt*-propylène), copolymères de poly(*t*-butylstyrène)-*b*-(éthylène-*alt*-propylène), copolymères de poly(triméthylsilylstyrène)-b-(éthylène-*alt*-propylène),
- copolymères de polystyrène-b-polysiloxane, copolymères de poly(a-méthylstyrène)-b-polysiloxane, copolymères de poly(para-méthylstyrène)-*b-*polysiloxane, copolymères de poly(*t*-butylstyrène)-*b*-polysiloxane, copolymères de poly(triméthylsilylstyrène)-b-polysiloxane,
- copolymères de polystyrène-b-poly(oxyalkylène), copolymères de poly(a-méthylstyrène)-b-poly(oxyalkylène), copolymères de poly(para-méthylstyrène)-*b-*poly(oxyalkylène), copolymères de poly(*t*-butylstyrène)-*b*-poly(oxyalkylène), copolymères de poly(triméthylsilylstyrène)-b-poly(oxyalkylène),
- copolymères de polystyrène-*b*-poly(ε-caprolactone), copolymères de poly(a-mèthylstyrène)-*b*-poly(ε-caprolactone), copolymères de *poly(para-*mèthylstyrène)-*b*-poly(ε-caprolactone), copolymères de poly(*t*-butylstyrène)-*b-*poly(ε-caprolactone), copolymères de poly(triméthylsilylstyrène)-*b-*poly(ε-caprolactone),
- copolymères de polystyrène-b-poly(méthacrylate de méthyle), copolymères de poly(a-méthylstyrène)-b-poly(méthacrylate de méthyle), copolymères de poly(para-méthylstyrène)-b-poly(méthacrylate de méthyle), copolymères de poly(*t*-butylstyrène)-*b*-poly(méthacrylate de méthyle), copolymères de poly(triméthylsilylstyrène)-b-poly(méthacrylate de méthyle),
- copolymères de polystyrène-b-poly(acrylate de méthyle), copolymères de poly(a-méthylstyrène)-b-poly(acrylate de méthyle), copolymères de poly(para-méthylstyrène)-b-poly(acrylate de méthyle), copolymères de poly(*t*-butylstyrène)-b-poly(acrylate de méthyle), copolymères de poly(triméthylsilylstyrène)-b-poly(acrylate de méthyle),
- copolymères de polystyrène-b-poly(méthacrylate d'hydroxyéthyle), copolymères de poly(a-méthylstyrène)-b-poly(méthacrylate d'hydroxyéthyle), copolymères de poly(para-méthylstyrène)-b-poly(méthacrylate d'hydroxyéthyle), copolymères de poly(*t*-butylstyrène)-*b*-poly(méthacrylate d'hydroxyéthyle), copolymères de poly(triméthylsilylstyrène)-b-poly(méthacrylate d'hydroxyéthyle),
- copolymères de polystyrène-*b*-polyacrylamide, copolymères de poly(a-méthylstyrène)-*b*-polyacrylamide, copolymères de poly(para-méthylstyrène)-*b-*polyacrylamide, copolymères de poly(*t*-butylstyrène)-*b*-polyacrylamide, copolymères de poly(triméthylsilylstyrène)-*b*-polyacrylamide,
- copolymères de polystyrène-b-poly(alcool vinylique), copolymères de poly(a-méthylstyrène)-*b*-poly(alcool vinylique), copolymères de *poly(para-*méthylstyrène)-*b*-poly(alcool vinylique), copolymères de poly(*t*-butylstyrène)-*b-*poly(alcool vinylique), copolymères de poly(triméthylsilylstyrène)-b-poly(alcool vinylique),
- copolymères de polystyrène-b-polyvinylpyrrolidone, copolymères de poly(a-méthylstyrène)-*b*-polyvinylpyrrolidone, copolymères de poly(para-méthylstyrène)-*b*-polyvinylpyrrolidone, copolymères de poly(*t*-butylstyrène)-*b-*polyvinylpyrrolidone et copolymères de poly(triméthylsilylstyrène)-*b-*polyvinylpyrrolidone,
- copolymères de polystyrène-b-polyvinylcyclohexane, copolymères de polystyrène-b-polyvinylcyclohexane, copolymères de polystyrène-b-polyvinylcyclohexane, copolymères de polystyrène-b-polyvinylcyclohexane, copolymères de poly(triméthylsilylstyrène)-b-polyvinylcyclohexane.

7. Procédé conforme à n'importe lesquelles des revendications précédentes, dans lequel le copolymère à blocs amphiphile présente une polydispersité de moins de 2,5.

8. Procédé conforme à n'importe lesquelles des revendications précédentes, dans lequel le solvant pour le polymère est choisi parmi de l'éther diéthylique, du diméthylformamide, du diméthylacétamide, de la *N*-méthylpyrrolidone, du diméthylsulfoxyde, de l'acétonitrile, du dioxane, de l'acétone et/ou du tétrahydrofurane.

9. Procédé conforme à n'importe lesquelles des revendications précédentes, dans lequel la solution de polymère(s) contient par ailleurs un sel organique d'un métal, le métal étant choisi parmi des éléments du deuxième groupe principal du tableau périodique.

10. Procédé conforme à n'importe lesquelles des revendications précédentes, dans lequel la solution de polymère(s) contient par ailleurs au moins un glucide choisi parmi un phénol polyfonctionnel, un acide organique polyfonctionnel, du saccharose, du D(+)-glucose, du D(-)-fructose et/ou de la cyclodextrine, en particulier de l'a-cyclodextrine.
